(19) Europäisches Patentamt
European Patent Office
Office européen des brevets

(11) **EP 3 220 628 A1**

(12) **EUROPEAN PATENT APPLICATION**
published in accordance with Art. 153(4) EPC

(43) Date of publication:
**20.09.2017 Bulletin 2017/38**

(21) Application number: **15861720.9**

(22) Date of filing: **08.07.2015**

(51) Int Cl.:
*H04N 5/369* (2011.01)          *G01J 1/42* (2006.01)
*G01J 1/46* (2006.01)          *H04N 5/357* (2011.01)
*H04N 5/374* (2011.01)

(86) International application number:
**PCT/JP2015/069693**

(87) International publication number:
**WO 2016/080016 (26.05.2016 Gazette 2016/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **20.11.2014 JP 2014235966**

(71) Applicant: **Shimadzu Corporation**
**Kyoto 604-8511 (JP)**

(72) Inventors:
• **HIROSE, Ryuta**
  **Kyoto-shi**
  **Kyoto 604-8511 (JP)**
• **KARASAWA, Tomohiro**
  **Kyoto-shi**
  **Kyoto 604-8511 (JP)**
• **TOMINAGA, Hideki**
  **Kyoto-shi**
  **Kyoto 604-8511 (JP)**

(74) Representative: **Webster, Jeremy Mark et al**
**Mewburn Ellis LLP**
**City Tower**
**40 Basinghall Street**
**London EC2V 5DE (GB)**

(54) **OPTICAL DETECTOR**

(57)      Provided is a photodetector 10 including: a plurality of photoelectric conversion elements 101 arranged within a photosensitive-element area 11 constituting one photosensitive element; the plurality of detection circuits 14 each of which is provided for one of the plurality of photoelectric conversion elements 101, each of the detection circuits including a capacitor 102; and a signal processing section 19 for totaling output signals produced by the plurality of detection circuits 14.

## Fig. 2

EP 3 220 628 A1

**Description**

TECHNICAL FIELD

The present invention relates to a photodetector, and particularly, to a photodetector used in an analyzing devices, such as a spectrophotometer.

BACKGROUND ART

Photodetectors are used in analyzing devices in a wide range of fields, such as a spectrophotometer or liquid chromatograph. In an absorbance measurement of a sample using a spectrophotometer, for example, a beam of white light emitted from a deuterium lamp (D2 light source) is cast into a sample cell, and the light which has transmitted through the sample cell is separated into a range of wavelengths by a wavelength-dispersing element (e.g. a diffraction grating) and detected by a photodetector.

In an absorbance measurement, in advance of an actual measurement of a sample, a beam of white light is cast into a sample cell containing only the solvent to be used for dissolving the sample, and the transmitted light exiting from the sample cell is subjected to a measurement to obtain a reference signal. Subsequently, with the sample solution contained in the sample cell, the measurement of the transmitted light is similarly performed to obtain a sample signal. Based on the difference between the sample signal and the reference signal, the amount of absorption by the sample is calculated, and the sample concentration is determined.

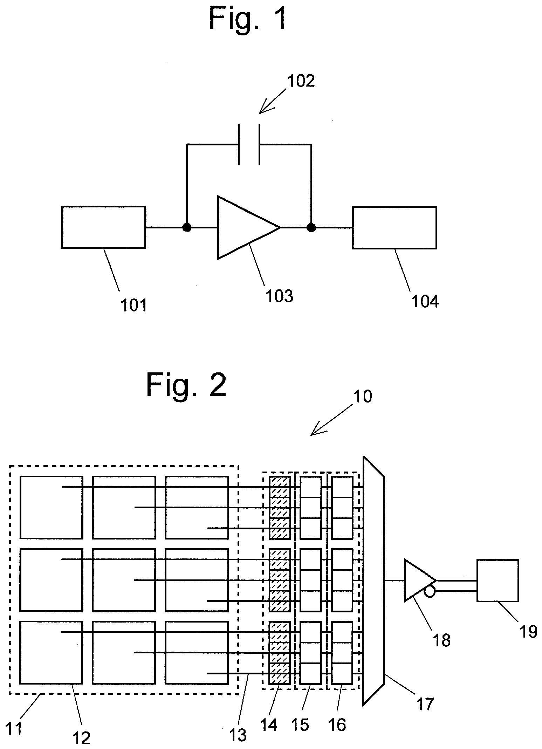

One of the conventionally and commonly used photodetectors is a photodiode detector (PD detector). As shown in Fig. 1, a PD detector includes a photodiode (PD) 101 and a detection circuit. The detection circuit has a capacitor 102, amplifier 103, analog-to-digital (A/D) converter 104 and other elements (for example, see Non-Patent Literature 1). The PD 101 converts incident light into electrons by photoelectric conversion and provides those electrons as photocurrent. In the detection circuit, the photocurrent accumulated in the capacitor 102 during the sampling period is converted into voltage, which is further converted into a digital value by the A/D converter and sent to an external system. In a PD detector having such a construction, the measurable range (dynamic range) of the detector can be widened by decreasing the voltage value relative to the number of incident electrons (conversion gain) by increasing the integral capacitance of the capacitor 102.

CITATION LIST

NON PATENT LITERATURE

Non Patent Literature 1: Tanaka, Makino, "Linear image sensor with high performance and large photosensitive element", Sensors and Actuators A, 29, 201-207, 1991
Non Patent Literature 2: Hirofumi SUMI, Tadakuni NARABU and Shinichiro SAITO, "For the Better Image Quality of CMOS Image Sensor", Fundamentals Review, Vol. 3, No. 3, pp. 44-51, January 2010

SUMMARY OF INVENTION

TECHNICAL PROBLEM

In the absorbance measurement, the amount of light incident on the detector may change by approximately 1000 times depending on the wavelength, due to such factors as the wavelength-intensity distribution of the light source used as well as the absorption characteristics of the sample, solvent and sample cell. Accordingly, a photodetector used in an absorbance measurement should be configured with a sufficiently wide measurable range so that it can detect a wide range of intensities of light and thereby enable accurate determination of the sample concentration. However, conventionally used PD detectors have the following problem if the measurable range is widened to increase the upper limit of the amount of incident light.

In the PD detector, the PD 101 converts incident light into electrons by photoelectric conversion and provides those electrons as photocurrent. In the detection circuit including the capacitor 102, the photocurrent is accumulated for each predetermined length of sampling period. The accumulated photocurrent is converted into voltage and sent to an external system.

The voltage value V obtained by converting the photocurrent into voltage in the detection circuit is expressed by equation (1):

$$V = (1/C)I\Delta t = (1/C)M \cdot e \quad \dots (1)$$

where $I$ is the photocurrent, C is the integral capacitance of the capacitor 102, $\Delta t$ is the length of the sampling period, M is the number of photoelectrons generated in the PD 101, and $e$ is the elementary charge (=1.602×10⁻¹⁹ C). $M$ may also be expressed as the product of the number of photons incident on the PD 101 and the quantum efficiency $\eta$ of the PD 101.

The kinds of noise in the detector are roughly divided into an optical shot noise which statistically occurs depending on the amount of incident light, and an electrical noise which occurs in the electrical circuits of the detector (for example, see Non-Patent Literature 2). For ease of explanation, a shot noise which results from dark current is not considered in the present description. The magnitude of the optical shot noise is expressed by the square root of the amount of incident light, whereas the magnitude of the electrical noise is independent of the amount of incident light. The electrical noise expressed as a voltage value $V_n$ can be converted into the number of electrons $M_n$ by equations (2) and (3), where $Q_n$ in equation (2) is the amount of noise charges:

$$Q_n = M_n \cdot e = C \cdot V_n \quad \dots (2)$$

$$M_n = C \cdot V_n / e \quad \dots (3)$$

The signal-to-noise (S/N) ratio of the detector can be expressed by equation (4) using the number of incident electrons $M$ and the magnitude of the electrical noise converted into the number of electrons $M_n$. The first term in the root symbol in the denominator of equation (4) corresponds to the optical shot noise. The second term corresponds to the electrical noise.

$$\frac{S}{N} = \frac{M}{\sqrt{M + M_n^2}} \quad \dots (4)$$

As can be understood from equation (3), even if the magnitude of the electrical noise $V_n$ is unchanged, if the integral capacitance $C$ of the capacitor 102 is increased in order to widen the measurable range, the number of noise electrons $M_n$ increases in proportion to the integral capacitance. As a result, the value of the second term in the root symbol in the denominator of equation (4) increases, which lowers the S/N ratio. This effect becomes particularly noticeable as the amount of incident light becomes smaller, i.e. as the value of the number of incident electrons $M$ in equation (4) becomes smaller.

A specific example which illustrates how the S/N ratio changes depending on the amount of incident light is hereinafter described. In the present example, it is assumed that the maximum signal voltage of the photodetector is 10 V, the electrical noise is 100 μV, and the upper limit of the measurement range is 10⁹ (number of electrons). In this case, the integral capacitance C of the capacitor 102 is given by:

$$C = Q/V = M \cdot e/V$$
$$= (10^9 \cdot 1.6 \cdot 10^{-19})/10 = 16 \cdot 10^{-12} \quad \dots (5)$$

Since the electrical noise is 100 μV,

$$Q_n = C \cdot V_n = 16 \cdot 10^{-12} \cdot 100 \cdot 10^{-6} = 16 \cdot 10^{-16} \quad \dots (6)$$

and therefore

$$M_n = Q_n / e = 16 \cdot 10^{-16} / 1.6 \cdot 10^{-19} = 10^4 = 10000 \quad \dots (7)$$

In the calculation of the S/N ratio based on equation (4), if $M$ equals the upper limit of the measurement range, i.e. if $M=10^9$, then $M_n{}^2=10^8$, so that $M > M_n{}^2$. By comparison, if $M=10^7$ or smaller, $M_n{}^2=10^8$ is larger than $M$, which means that the electrical noise constitutes the major cause of the entire noise of the detector. For example, when $M=10^6$, the S/N ratio is 99.5, which is by more than one order of magnitude lower than the S/N ratio for which only the optical shot noise is considered (S/N=1000).

The problem to be solved by the present invention is to provide a photodetector which ensures a high S/N ratio regardless of the amount of incident light while allowing the measurable range to be widened.

SOLUTION TO PROBLEM

The photodetector according to the present invention developed for solving the previously described problem includes:

a) a plurality of photoelectric conversion elements arranged within a photosensitive-element area constituting one photosensitive element;
b) a plurality of detection circuits each of which is provided for one of the plurality of photoelectric conversion elements, each of the detection circuits including a capacitor; and
c) a signal processing section for totaling output signals produced by the plurality of detection circuits.

For example, the photoelectric conversion elements are photodiodes.

For example, the signal processing section may include: an analog-to-digital converter for converting a signal produced by each of the plurality of detection circuits into a digital signal; a digital memory for storing digital signals produced by the analog-to-digital converter; a multiplexer for sequentially reading digital signals from the digital memory; and a digital computing unit for totaling the digital signals sequentially read by the multiplexer.

The photodetector according to the present invention may have a plurality of photosensitive elements. In a photodetector having a plurality of photosensitive elements, each of the photosensitive elements may be constructed in the previously described manner.

In a conventional photodetector, each photosensitive element has a single photoelectric conversion element and a single detection circuit for processing output signals of the photoelectric conversion element. In the photodetector according to the present invention, each photosensitive element has a plurality of combinations of photoelectric conversion elements and detection circuits, with each combination having one photoelectric conversion element and one detection circuit. As noted earlier, conventional photodetectors have the problem that increasing the integral capacitance of the capacitor in the detection circuit in order to widen the dynamic range causes an increase in the number of noise electrons and lowers the S/N ratio. By comparison, in the case of the photodetector according to the present invention, the dynamic range can be widened by simply increasing the number of combinations of the photoelectric conversion elements and detection circuits; there is no need to increase the integral capacitance of the capacitor in the detection circuit. Accordingly, it is possible to ensure a high S/N ratio while widening the measurable range.

The signal transport from the photoelectric conversion element to the capacitor in the detection circuit is carried out by an electric current. Therefore, if the wiring distance between these two elements is long, a high parasitic capacitance occurs. Similarly to the integral capacitance of the capacitor, this parasitic capacitance also constitutes a factor which increases the number of noise electrons $M_n$ expressed by equation (3).

Accordingly, in the photodetector according to the present invention, at least the capacitor in the detection circuit should preferably be located within the photosensitive-element area. This arrangement reduces the wiring distance from the photoelectric conversion element to the capacitor and minimizes an increase in the amount of noise electrons.

The photodetector according to the present invention may also be configured so that the signal processing section totals output signals produced by the plurality of detection circuits for each of a plurality of sub-periods set by dividing the sampling period, and provides the total signal at intervals of the sampling period.

For example, in the case where $K$ photoelectric conversion elements are provided within one photosensitive-element area (where $K$ is an integer equal to or greater than two) and the sampling period is divided into $L$ segments of time (where $L$ is an integer equal to or greater than two), the dynamic range can be widened by $K \times L$ times, without increasing the integral capacitance, by reading an output signal in each segment of time, totaling the read output signals, and providing the total signal as the output signal for one photosensitive element and one sampling period.

ADVANTAGEOUS EFFECTS OF THE INVENTION

With the photodetector according to the present invention, it is possible to ensure a high S/N ratio regardless of the amount of incident light while allowing the measurable range to be widened.

BRIEF DESCRIPTION OF DRAWINGS

Fig. 1 is a configuration diagram of the main components of a conventional PD detector.
Fig. 2 is a partial configuration diagram of a PD detector of the first embodiment.
Fig. 3 is a partial configuration diagram of a PD detector of the second embodiment.
Fig. 4 is a diagram of the inner configuration of a photosensitive sub-element area in the second embodiment.
Fig. 5 is a configuration diagram of a correlated double sampling circuit in the PD detector of the second embodiment.
Fig. 6 is a graph comparing the S/N ratio of the PD detector of the second embodiment with that of a conventional PD detector.
Fig. 7 is a partial configuration diagram of a PD detector of the third embodiment.
Fig. 8 is a circuit configuration diagram in the PD detector of the third embodiment.

DESCRIPTION OF EMBODIMENTS

Embodiments of the photodetector according to the present invention are hereinafter described with reference to the drawings. The photodetector according to any of the present embodiments is a photodiode (PD) detector having a plurality of photosensitive elements and is intended to be used as a detector in an analyzing device.

FIRST EMBODIMENT

Fig. 2 shows a partial configuration corresponding to one photosensitive element in the PD detector 10 of the present embodiment. The photosensitive-element area 11 has a size of 10 mm $\times$ 10 mm and is divided into 100 (10$\times$10) photosensitive sub-element areas 12 (although Fig. 2 shows only nine of them), with one photodiode placed in each photosensitive sub-element area 12. The photodiode in each photosensitive sub-element area 12 is connected through one of the independently provided signal-reading lines 13 to one of the detection circuits 14 placed outside the photosensitive-element area 11. Each of the detection circuits 14 is an integrator circuit including a capacitor 102 and amplifier 103, as in the conventional PD detector already illustrated with reference to Fig. 1. Each detection circuit 14 has an analog-to-digital (A/D) converter 15 and digital memory 16 connected in series. The numbers of the detection circuits 14, A/D converters 15 and digital memories 16 are the same as that of the photosensitive sub-element areas 12 (i.e. 100), although only nine of each of these elements are shown. The signals stored in the 100 digital memories 16 are sequentially read by a multiplexer 17 and sent to a digital computing unit 19 through the output port of a high-speed digital output circuit 18 connected to the multiplexer 17. The digital computing unit 19 totals the 100 output signals and provides the total signal as the output signal for one photosensitive element at predetermined intervals of sampling time.

The S/N ratio of the photodetector in the present embodiment under specific measurement conditions is hereinafter described.

For the present embodiment, the following measurement conditions are assumed: The accumulation time (which corresponds to the sampling period) is 10 ms. The maximum number of photons incident on the photosensitive-element area 11 during the accumulation time is $2 \times 10^9$. The quantum efficiency of the photodiode is $\eta$=0.5. The maximum value of the voltage in the detection circuit 14 (the voltage value produced upon incidence of the maximum number of photons) is 10 V. The electrical noise is 100 $\mu$V.

As already explained using equation (5), in the conventional PD detector, a capacitor having an integral capacitance of $C$=16 pF is used in order to be compatible with the aforementioned measurement conditions. In the present embodiment, since incident light is distributed over 100 photodiodes arrayed within the photosensitive-element area 11, the maximum number of electrons generated within each photosensitive sub-element area 12 is $10^7$. Accordingly, the integral capacitance C of each capacitor 102 can be decreased to 0.16 pF.

The S/N ratio in the present embodiment can be expressed by equation (8):

$$\frac{S}{N} = \frac{K \cdot m}{\sqrt{K \cdot m + K \cdot m_n^{\,2}}}$$

$$= \frac{M}{\sqrt{M + K \cdot m_n^{\,2}}} \quad \ldots(8)$$

where $K$ is the number of photosensitive sub-element areas 12 in the photosensitive-element area 11, which is 100 in the present configuration example. Parameter $m$ is the number of electrons generated in the photodiode placed in the sub-element area. When the number of photons $M$ generated in the photosensitive-element area 11 is $10^6$, the S/N ratio calculated by equation (8) is 707, which is much higher than the S/N ratio of the conventional PD detector, i.e. 99.5. The term $K \cdot m_n^2$ representing the electrical noise in equation (8) has a value of $10^6$.

If the photodiode is in the form of a package and mounted on a printed circuit board along with the integrator circuit having an analog IC and capacitor, the number of noise electrons increases due to the parasitic capacitance of the package of the photodiode and/or analog IC as well as the parasitic capacitance due to the wiring on the printed circuit. Since these parasitic capacitances are also on the order of pF, it is practically difficult to construct an integration amplifier having a high gain as obtained by the previously described calculation. Accordingly, at least the portion of the integration amplifier in the detection circuit should preferably be integrally formed on the same semiconductor integrated circuit board as the photodiode.

A device having such a configuration and manufactured by a CMOS process which is capable of micro-wiring is hereinafter described as the second embodiment.

SECOND EMBODIMENT

In general, CMOS devices are operated at a low supply voltage. Therefore, in many cases, it is impossible to handle a high voltage of 10 V within the device, as in the first embodiment. Accordingly, the following description deals with an example in which the upper limit of the voltage that can be handled within the device is 1 V, while the electrical noise is the same as in the previous case, i.e. 100 $\mu$V.

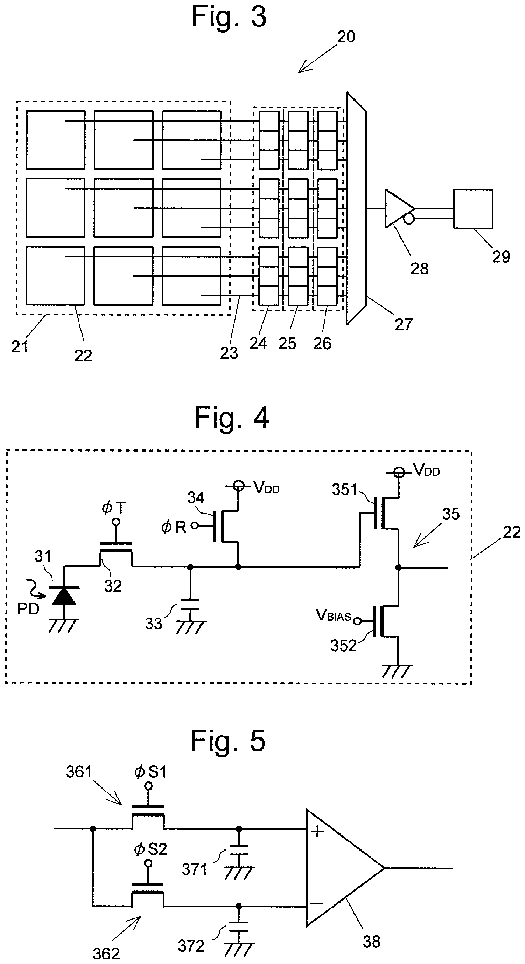

Fig. 3 is a partial configuration diagram corresponding to one photosensitive element in the PD detector 20 of the second embodiment. This detector has a similar configuration to that of the PD detector 10 of the first embodiment. However, unlike the first embodiment in which the detection circuits 14 are placed outside the photosensitive-element area 11, the detection circuit in the second embodiment is included in each photosensitive sub-element area 22, as shown in Fig. 4. Additionally, a correlated double sampling circuit (CDS circuit) 24 is placed between the detection circuit and the A/D converter 25. As opposed to the first embodiment in which the photosensitive-element area 11 is divided into 100 photosensitive sub-element areas 12, the photosensitive-element area 21 in the second embodiment is divided into 10,000 ($100 \times 100$) photosensitive sub-element areas 22.

The elements arranged within the photosensitive sub-element area 22 are as follows: a photodiode 31; a transfer transistor 32, provided at the end of a signal-reading line connected to the photodiode 31, for transferring photocharges; a floating diffusion 33, connected to the photodiode 31 via the transfer transistor 32, for temporarily accumulating photocharges and converting those charges into a voltage signal; a reset transistor 34 for removing electric charges accumulated in the floating diffusion 33; and a source follower amplifier 35 formed by two cascade-arranged transistors 351 and 352, for providing, as a voltage signal, the electric charges accumulated in the floating diffusion 33. Power sources $V_{DD}$ are connected to the reset transistor 34 and the transistor 351, respectively. A constant voltage (bias voltage) $V_{BIAS}$ is connected to the gate of the transistor 352.

Drive lines (not shown) for supplying control signals $\varphi$T and $\varphi$R are connected to the gate of the transfer transistor 32 and that of the reset transistor 34, respectively. Based on the control signals supplied through these drive lines, the intensity of the light incident on the photodiode 31 is detected at predetermined intervals of sampling time.

The S/N ratio in the configuration of the second embodiment is hereinafter calculated under the same conditions as in the first embodiment except that the upper limit of the voltage is 1 V.

In the second embodiment, there are 10,000 photosensitive sub-element areas 22 within the photosensitive-element area 21, with one photodiode 31 placed in each photosensitive sub-element area. Accordingly, the upper limit of the number of electrons generated in each photodiode 31 is $10^5$. Since the upper limit of the voltage is 1 V, the integral capacitance C of the used capacitor calculated by equation (1) is 16 fF. From equation (3), the number of noise electrons $M_n$ corresponding to an electrical noise of 100 $\mu$V is 10. Then, the term representing the electrical noise in equation (4) is $K \cdot M_n^2 = 10^6$. This value is the same as in the first embodiment. This result demonstrates that an S/N ratio which is as high as in the first embodiment can be ensured even in the case where high voltages cannot be handled, as in a device manufactured by a CMOS process.

In the second embodiment, since the detection circuit is located within the photosensitive sub-element area 22 as shown in Fig. 4, a high conversion gain can be achieved by reducing the influence of the parasitic capacitance due to the wiring. Unlike the first embodiment in which the photocurrents produced from the photosensitive sub-element areas 12 are converted into a voltage signal by the integrator located outside the photosensitive-element area 11, the accumulation of the photocurrent in the second embodiment is performed within the photosensitive sub-element area 22. The photoelectrons generated in the photodiode 31 during the accumulation time (sampling period) are electrically transferred through the reading gate (transfer transistor 32) into the diffusion layer of the floating diffusion (FD) and converted into voltage through the capacitance of the diffusion layer. In this manner, by placing the FD in the vicinity of the photodiode 31 and reducing the influence of the parasitic capacitance due to the wiring, a configuration having a low capacitance of 16 fF can be embodied.

In the case where the integral capacitance is as low as in the second embodiment, the influence of the reset noise (or "thermal noise") also needs to be considered. In the detection circuit, before the number of photoelectrons is converted into voltage through the integral capacitance, the integral capacitance needs to be reset to the reference voltage for each sampling period. In this operation, a reset noise occurs due to the fluctuation of the reset voltage. The relationship between the reset noise and the integral capacitance is expressed by equation (9):

$$V_n\_reset = \sqrt{kT/C} \quad ...(9)$$

Equation (9) shows that the lower the integral capacitance $C$ is, the higher the reset noise becomes. For example, when the integral capacitance is $C$=16 fF and the temperature is $T$=300 K, the reset noise is 509 $\mu$V, which is more than five times as high as the electrical noise.

In the second embodiment, in order to eliminate the influence of the reset noise, a correlated double sampling circuit (CDS circuit) 24 as shown in Fig. 5 is provided. The CDS circuit 24 includes two selection transistors 361 and 362, two capacitors 371 and 372, as well as a differential amplifier 38. By using the CDS circuit 24, the reset noise can be removed by sampling the voltage at the point in time where the floating diffusion is reset as well as the voltage at the point in time after the photoelectrons are transferred to the floating diffusion, and computing the difference between the two voltages.

The output signals from the CDS circuits 24 are converted into digital signals by the A/D converters 25. After being stored in the digital memories 26, those signals are sequentially read by the multiplexer 27 and sent to the digital computing unit 29 through the output port of the high-speed digital output circuit 28. The digital computing unit 29 totals the output signals from all photosensitive sub-element areas 22 and provides the total signal as the output signal for one photosensitive element.

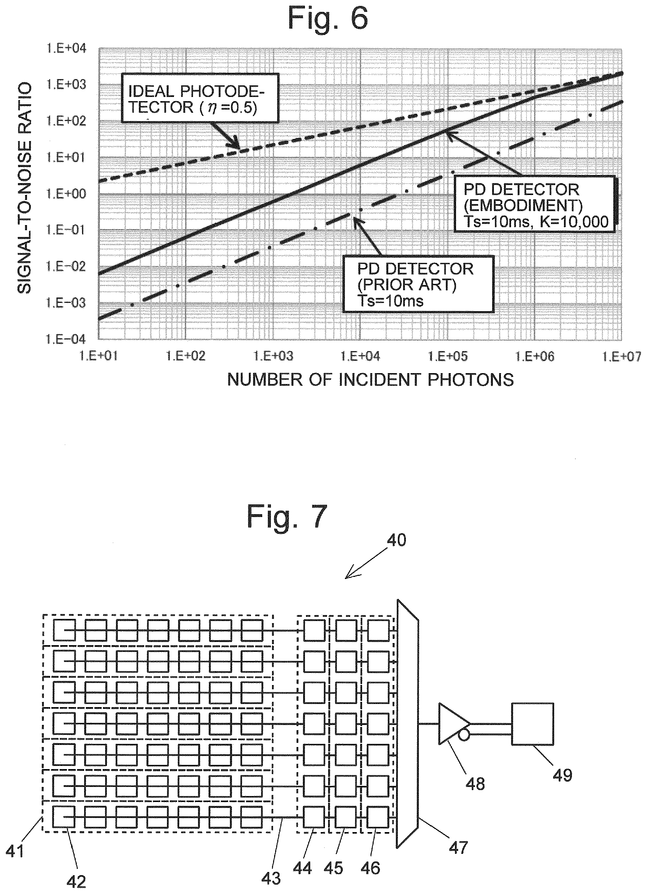

Fig. 6 is a graph comparing the S/N ratio of the PD detector 20 of the second embodiment with that of a conventional PD detector. As shown in this graph, by using the PD detector 20 of the second embodiment, it is possible to increase the S/N ratio to a level which is higher than that of the conventional PD detector by more than one order of magnitude and closer to the level of an ideal detector (i.e. a PD detector in which no electrical noise occurs).

THIRD EMBODIMENT

Fig. 7 shows the configuration of a PD detector 40 of the third embodiment. In this PD detector 40, seven photosensitive-element areas 41 are arrayed in the vertical direction in the figure, with each photosensitive-element area 41 divided into 1000 photosensitive sub-element areas 42 in the horizontal direction (although only seven of them are shown in the figure). The photosensitive-element area 41 has a size of 2.5 $\mu$m $\times$ 2.5 mm, while each photosensitive sub-element area 42 has a size of 2.5 $\mu$m $\times$ 2.5 $\mu$m. Each photosensitive-element area 41 is provided with one signal-reading line 43, which is shared by the photosensitive sub-element areas 42 included in the photosensitive-element area 41 concerned. A CDS circuit 44, A/D converter 45 and digital memory 46 corresponding to each photosensitive element are provided at the end of the signal-reading line 43, along with a multiplexer 47 for sequentially reading the signals stored in the digital memories 46, as well as a high-speed digital output circuit 48 and digital computing unit 49. By this configuration, the plurality of detection circuits (capacitors) (photosensitive sub-element areas 42) in the photosensitive-element areas 41 are organized into one or more groups, while the signal processing section has one A/D converter 45 and one digital memory 46 (signal storage section) for each group.

The digital computing unit 49 performs appropriate operations according to the purpose of the analysis, such as averaging the signals detected by the detection circuits corresponding to the photosensitive-element areas 41 or calculating a difference between those signals. The digital computing unit 49 may also be configured to calculate a difference in the signal continuously produced from the same photosensitive element over a period of time based on analysis conditions specified by an analysis operator on a separate control device. A specific configuration is as follows: An output signal corresponding to only the background light is initially acquired in the first accumulation period. Subsequently, in each accumulation period, an output signal corresponding to the sum of the background light and measurement light is acquired, and the former output signal is subtracted from the latter. The result of this calculation is sent to an external system as the output signal corresponding to the measurement light.

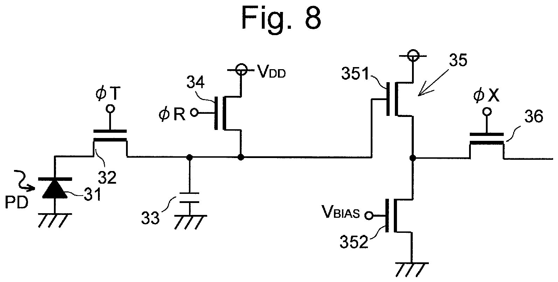

Fig. 8 is a circuit configuration diagram in the photosensitive sub-element area 42. As with the circuit described in the second embodiment using Fig. 3, this circuit includes a photodiode 31, transfer transistor 32 for transferring photocharges, floating diffusion 33, reset transistor 34, as well as a source follower amplifier 35 formed by two transistors 351 and 352. In addition, a selection gate 36 is placed behind the source follower amplifier 35.

In this PD detector 40, the predetermined interval of sampling time at which the digital computing unit 49 provides an output signal obtained by totaling the signals from the photosensitive elements is divided (i.e. frequency-divided) into sub-periods (e.g. 1000 sub-periods), while the selection gates 36 in the 1000 photosensitive sub-element areas 42 are sequentially supplied with control signal $\varphi X$ (a signal which indicates the sub-period) through their respective gate terminals. The photocurrents produced by the 1000 photodiodes 31 belonging to the same photosensitive-element area 41 are sequentially read from one photosensitive sub-element area 42 in each sub-period, and temporarily stored in the digital memories 46. The stored signals are totaled by the digital computing unit 49 at the predetermined intervals of sampling time and provided as the output signal.

In this PD detector 40, since the photosensitive-element area 41 is divided into 1000 photosensitive sub-element areas 42, the integral capacitance $C$ of the capacitor is 160 fF, the electrical noise converted into the number of electrons is 100, and the value of the term $K \cdot M_n^2$ representing the electronical noise in equation (8) is $10^7$ under the same conditions as in the second embodiment, i.e. the maximum number of photons incident on the photosensitive-element area 41 is $2 \times 10^9$, the quantum efficiency of the photodiode 31 is $\eta=0.5$, the maximum value of the voltage in the detection circuit (the voltage value produced upon incidence of the maximum number of photons) is 1 V, and the electrical noise is 100 $\mu$V. Although the term representing the electronical noise in the third embodiment has a larger value than in the second embodiment, this value can be appropriately decreased by increasing the number of divisions of the photosensitive-element area 41.

In the previously described configuration, since the number of photosensitive sub-element areas 42 arranged within the photosensitive-element area 41 is the same as the number of divisions of the sampling period, each photosensitive element is provided with one signal-reading line 43 and other related elements. It is also possible to adopt a different configuration. For example, the number of divisions of the sampling period can be decreased to one half of the number of photosensitive sub-element areas by dividing the photosensitive sub-element areas 42 arranged within each photosensitive-element area 41 into two groups and providing each group with one signal-reading line 43 and other related elements.

The configurations described in the previous embodiments not only increase the S/N ratio by decreasing the magnitude of the electrical noise but also improve the yield rate of the chip-manufacturing process. In commonly used manufacturing process techniques, the circuit wiring is formed on a semiconductor substrate by mask-pattern projection. In this process, foreign matters (e.g. particles) may adhere to the wafer surface. If this occurs, the desired circuit wiring cannot be formed, and a spot region in which the dark current or leak current specifically increases is formed. If such a spot region is formed in one of the photosensitive elements in a conventional PD array detector, the entire array detector will be treated as a defective product due to that single photosensitive element, since each photosensitive element has only one combination of the PD and the detection circuit inside.

By comparison, in the previously described embodiments, the photosensitive-element area is divided into a plurality of photosensitive sub-element areas, with each photosensitive sub-element area having a PD and detection circuit arranged for it. Even if a spot region has occurred in one of the $L$ divisions of the photosensitive-element area, a correct output signal can still be obtained by converting the $L$-1 available detection signals into $L$ signals or by performing a computing process for estimating the signal value at the spot region from the detection signals obtained at the photosensitive sub-element areas adjacent to the spot region. Accordingly, the array detector will not be treated as a defective product, so that the yield rate will be improved. Since the presence of a defective photosensitive sub-element area can be detected in the production process, it is possible, for example, to previously configure the digital computing unit 49 in the third embodiment so as to automatically perform the aforementioned computing process. That is to say, for example, the digital computing unit 49 can be configured to disregard a specific photosensitive sub-element area and perform a computing process using only the output signals from the other photosensitive sub-element areas.

Any of the previous embodiments is a mere example and can be appropriately changed without departing from the spirit of the present invention. In the previous embodiments, the A/D converters are provided so as to read signals at high speeds. However, those A/D converters are unnecessary in the case where the voltage signals are processed in analog form. The number of divisions of the photosensitive-element area in each embodiment is also a mere example and may be appropriately changed. The configuration in any of the embodiments is applicable in any type of array detector having a plurality of photosensitive-element areas arranged in a one-dimensional or two-dimensional form. The computing processes performed by the digital computing unit described in the third embodiment are also mere examples; for example, the digital computing unit may be configured to perform an appropriate computing process according to the content of the analysis using an analyzing device which includes a PD detector according to one of the previous embodiments.

In the previous descriptions, for ease of understanding, the equations which do not take into account the influence of the shot noise resulting from the dark current (which is hereinafter called the "dark-current shot noise") were used to calculate the S/N ratio. A case in which the dark-current shot noise is considered is hereinafter described.

Adding the term $M_{dark}$ representing the dark-current shot noise to equation (4) for calculating the S/N ratio for a conventional PD detector gives the following equation (10):

$$\frac{S}{N} = \frac{\eta \cdot M_{photon}}{\sqrt{\eta \cdot M_{photon}}} \quad \ldots(10)$$

This equation does not include the term representing the dark current itself, because the dark current can be removed by using the previously described CDS circuit.

On the other hand, adding the term representing the dark-current shot noise to equation (8) for calculating the S/N ratio of a PD detector according to the present invention gives the following equation (11). Using this equation (11) for a PD detector according to the present invention also yields a higher S/N ratio than that of the conventional PD detector calculated by equation (10).

$$\frac{S}{N} = \frac{K \cdot m}{\sqrt{K \cdot m + K \cdot m_{dark} + K \cdot m^2_{read}}}$$

$$= \frac{M}{\sqrt{M + M_{dark} + K \cdot m^2_{read}}} \quad \ldots(11)$$

REFERENCE SIGNS LIST

        10, 20, 40... PD Detector
        11, 21, 41... Photosensitive-Element Area
        12, 22, 42... Photosensitive Sub-Element Area
        13, 23, 43... Signal-Reading Line
        14... Detection Circuit
        24, 44... Correlated Double Sampling Circuit
        15, 25, 45... A/D Converter
        16, 26, 46... Digital Memory
        17, 27, 47... Multiplexer
        18, 28, 48... High-Speed Digital Output Circuit
        19, 29... Digital Adder
        49... Digital Computing Unit
        31... Photodiode
        32... Transfer Transistor
        33... Floating Diffusion
        34... Reset Transistor
        35... Source Follower Amplifier
        361, 362... Selection Transistor
        371, 372... Capacitor
        38... Differential Amplifier

**Claims**

1. A photodetector, comprising:

        a) a plurality of photoelectric conversion elements arranged within a photosensitive-element area constituting one photosensitive element;
        b) the plurality of detection circuits each of which is provided for one of the plurality of photoelectric conversion elements, each of the detection circuits including a capacitor; and
        c) a signal processing section for totaling output signals produced by the plurality of detection circuits.

2. The photodetector according to claim 1, wherein the capacitor is located within the photosensitive-element area.

3. The photodetector according to claim 1 or 2, wherein the signal processing section totals output signals produced by the plurality of detection circuits for each of a plurality of sub-periods set by dividing a sampling period, and provides a total signal at intervals of the sampling period.

4. The photodetector according to one of claims 1-3, wherein the plurality of detection circuits are organized into one or more groups, while the signal processing section has an analogue-to-digital converter and a signal storage section for each group.

5. The photodetector according to one of claims 1-4, wherein the detection circuits or the signal processing section has a correlated double sampling circuit.

6. The photodetector according to one of claims 1-5, wherein the signal processing section performs a signal processing after discarding an output signal from a detection signal corresponding to a previously specified photoelectric conversion element.

7. An analyzing device, comprising a photodetector according to one of claims 1-6.

# Fig. 1

# Fig. 2

# Fig. 3

20

21 22 23 24 25 26 27 28 29

# Fig. 4

$\phi T$

$\phi R$   34   $V_{DD}$

351   $V_{DD}$

31

PD   32

33

35

$V_{BIAS}$

352

22

# Fig. 5

361   $\phi S1$

$\phi S2$

362

371

372

+

−

38

# Fig. 6

# Fig. 7

# Fig. 8

## INTERNATIONAL SEARCH REPORT

| International application No. |
|---|
| PCT/JP2015/069693 |

### A. CLASSIFICATION OF SUBJECT MATTER
*H04N5/369*(2011.01)i, *G01J1/42*(2006.01)i, *G01J1/46*(2006.01)i, *H04N5/357* (2011.01)i, *H04N5/374*(2011.01)i

According to International Patent Classification (IPC) or to both national classification and IPC

### B. FIELDS SEARCHED

Minimum documentation searched (classification system followed by classification symbols)
H04N5/369, G01J1/42, G01J1/46, H04N5/357, H04N5/374

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2010-28423 A  (Sony Corp.),<br>04 February 2010 (04.02.2010),<br>paragraphs [0013], [0018], [0034] to [0056];<br>fig. 1 to 5<br>& US 2010/0013969 A1    & US 2013/0313411 A1<br>& EP 2146498 A2       & KR 10-2010-0009508 A<br>& CN 101702753 A      & TW 201008265 A | 1-4,7<br>5-6 |
| Y | JP 2014-165526 A  (Canon Inc.),<br>08 September 2014 (08.09.2014),<br>paragraph [0065]<br>& US 2014/0232914 A1 | 5 |
| Y | JP 2009-49527 A  (Canon Inc.),<br>05 March 2009 (05.03.2009),<br>paragraphs [0009] to [0011]<br>& US 2009/0046917 A1    & CN 101370091 A | 6 |

☒ Further documents are listed in the continuation of Box C.　　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 August 2015 (31.08.15) | 08 September 2015 (08.09.15) |

| Name and mailing address of the ISA/<br>Japan Patent Office<br>3-4-3,Kasumigaseki,Chiyoda-ku,<br>Tokyo 100-8915,Japan | Authorized officer |
|---|---|
| | Telephone No. |

Form PCT/ISA/210 (second sheet) (July 2009)

**INTERNATIONAL SEARCH REPORT**

International application No.

PCT/JP2015/069693

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-83407 A  (Canon Inc.),<br>30 March 2001 (30.03.2001),<br>paragraphs [0136] to [0139]; fig. 32<br>& EP 1085751 A2 | 1-7 |
| A | JP 2000-305010 A  (Olympus Optical Co., Ltd.),<br>02 November 2000 (02.11.2000),<br>paragraphs [0111] to [0113]; fig. 16<br>& US 6781632 B1 | 1-7 |
| A | JP 7-306133 A  (Hitachi Electronics Engineering Co., Ltd.),<br>21 November 1995 (21.11.1995),<br>paragraphs [0002], [0012], [0015]<br>(Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TANAKA ; MAKINO.** Linear image sensor with high performance and large photosensitive element. *Sensors and Actuators A,* 1991, vol. 29, 201-207

- **HIROFUMI SUMI ; TADAKUNI NARABU ; SHIN-ICHIRO SAITO.** For the Better Image Quality of CMOS Image Sensor. *Fundamentals Review,* January 2010, vol. 3 (3), 44-51